# EUROPEAN PATENT SPECIFICATION

(11) **EP 0 616 666 B1**
(45) Date of publication and mention of the grant of the patent: **20.12.1995**
(21) Application number: 92923940.8
(22) Date of filing: 27.11.1992
(51) Int. Cl.: F16D 65/092, F16D 69/04

(54) **BRAKE PAD**
BREMSBACKE
PLAQUETTE DE FREIN A DISQUES

(30) Priority: 10.12.1991 GB 9126310
(43) Date of publication of application: 28.09.1994
(73) Proprietor: FERODO LIMITED, Stockport, Cheshire SK12 6JP (GB)
(72) Inventor: KAO, Tseng Kuan, Rugby, Warwickshire CV22 7BW (GB)
(74) Representative: Drury, Peter Lawrence
(86) International application number: GB9202207
(87) International publication number: WO9312358

(56) References cited:
- FR-A- 2 151 841
- GB-A- 1 265 913
- GB-A- 1 589 392

## Description

This invention is concerned with a brake pad for a disc brake.

Conventionally, a brake pad for a disc brake (as known for example from FR-A-2 151 841) comprises a block of friction material having a contact surface arranged to be brought into engagement with the moving member so that frictional forces between the contact surface and the member cause the member to decelerate. The contact surface is generally planar or slightly curved. The brake pad also comprises a backing plate on which the block of friction material is carried. The block may be mounted directly on the backing plate or there may be a thin underlayer between the block and the backing plate to assist adherence and to reduce thermal conduction. The backing plate has to withstand considerable reaction forces. The backing plate, therefore, has to be of sturdy construction.

The increased demands upon brake performance in recent years have resulted in brake pads operating under thermal and mechanical loads which are very close to the limit of modern materials technology. When braking from high speeds in a short time interval, disc temperature can reach over 600°C. These high temperatures induce severe thermal stresses in the brake pad which can cause the material of the pad to crack. It is found that cracking most often occurs at the leading or trailing edge of the block, relative to the direction of movement of the moving member past the brake pad, and at the interface between the block and the backing plate or the block and the underlayer.

It is an object of the present invention to provide a brake pad in which the possibility of cracking due to thermal stresses is reduced.

The invention provides a brake pad for a disc brake suitable for use in braking a moving member, the brake pad comprising a block of friction material having a contact surface arranged to be brought into engagement with the moving member, the contact surface extending between a leading edge of the block, relative to the direction of movement of the moving member past the brake pad, and a trailing edge of the block, the brake pad also comprising a backing plate on which the block of friction material is carried, the backing plate extending generally parallel to the contact surface of the block, characterised in that the backing plate is substantially rigid in a central region thereof which supports a central region of the block and is flexible in edge regions thereof which support the block adjacent to its leading and trailing edges.

A pad in accordance with the invention has increased flexibility in the regions of greatest stress concentration so that the pad can bend to accommodate this stress. It is found that increased flexibility at the edges can be achieved without having a serious effect upon the strength of the backing plate and is a more effective solution than increasing the thickness of the backing plate to withstand the high stresses.

The flexibility of the edge regions of the backing plate may be achieved by a reduction in the thickness of the backing plate in said edge regions. The central region of the backing plate may be of substantially uniform thickness.

The reduced thickness of the backing plate may be provided by chamfers on the surface of the backing plate away from the block. The chamfers may have an angle of between 5 and 10°.

Alternatively, the reduced thickness of the backing plate may be provided by grooves in the surface of the backing plate away from the block, or in the surface facing the block. In the latter case, the friction material may enter the grooves. The grooves may be rectangular in cross-section or have re-entrant side walls.

Alternatively, the reduced thickness of the backing plate may be provided by steps, in the surface of the backing plate away from the block or in the surface facing the block. The steps may each have a curved profile e.g. they may be of parabolic shape when viewed in plan. The step may have an inclined face.

Where the block is separated from the backing plate by an underlayer, the backing plate is preferably reduced in thickness on its surface facing the block, for example, by groove or a step. The reduction in thickness may be filled by underlayer which makes a minimal contribution to stiffness or by friction material to increase adhesion between the block and the plate.

The thickness reduction of the backing plate may be by a maximum of 50%. However, in practice the minimum backplate thickness is limited by the need to distribute the mechanical load to the pad. Hence, a compromise between the need for sufficient strength and the flexibility requirement is necessary.

There now follow detailed descriptions, to be read with reference to the accompanying drawings of nine brake pads which are illustrative of the invention.

In the drawings:
Figures 1 to 4 are cross-sectional views each taken through one of the first four illustrative pads;
Figures 5A and 5B show, respectively, a side elevational and an underneath view of the fifth, illustrative brake pad;
Figures 6A and 6B, and Figures 7A and 7B are similar to Figures 5A and 5B but show, respectively, the sixth and the seventh illustrative brake pads;
Figures 8 and 10 are views similar to Figures 1 to 4 but of the eighth and nineth illustrative brake pads respectively;
Figures 9 illustrates a variation of the eighth illustrative brake pad; and
Figures 11 and 12 illustrate variations of the nineth illustrative brake pad.

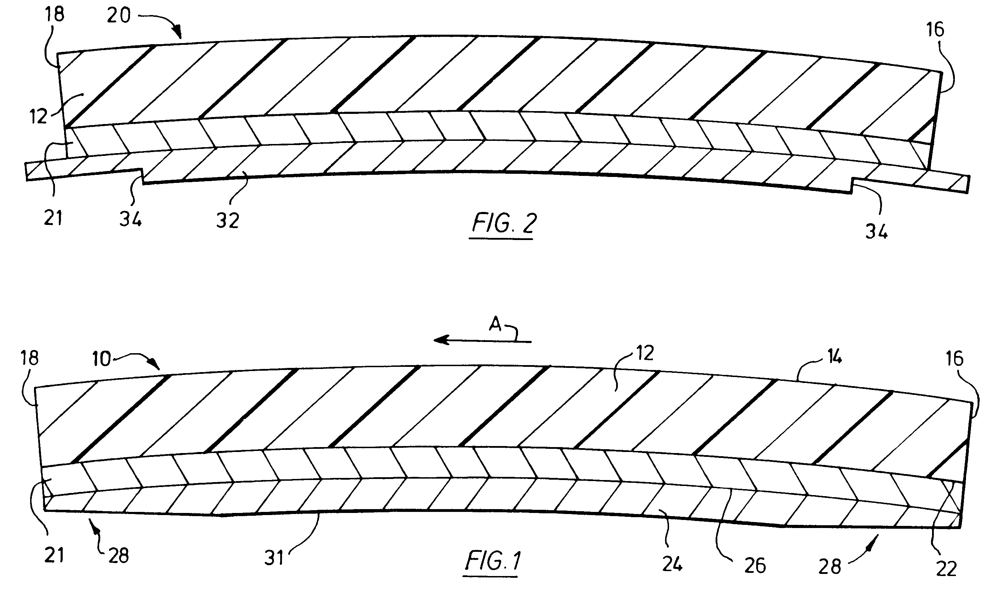

The first illustrative brake pad 10 shown in Figure 1 is for a disc brake and is suitable for use in braking a moving member (not shown) moving past the brake pad 10 in the direction of the arrow A. The pad 10 is mounted for movement normally to the arrow A to contact the moving member so that the moving member is braked by frictional forces.

The brake pad 10 comprises a block 12 of friction material having a contact surface 14 arranged to be brought into contact with the moving member. The contact surface 14 extends between a leading edge 16 (in the direction of the arrow A) and a trailing edge 18 of the block 12. Thus, the edges 16 and 18 are leading and trailing, respectively, relative to the direction of movement of the moving member past the pad 10. Should the direction of movement be reversed, the leading edge 16 becomes the trailing edge and the trailing edge 18 becomes the leading edge.

The backing pad 10 also comprises an underlay 21 on which an opposite surface 22 of the block 12 to the contact surface 14 is mounted, and a backing plate 24 secured to the underlay 21 by a layer of adhesive 26. Additionally, the block 12 is secured to the backing 24 by cylindrical projections of the block (not shown) which are received in holes in the backing plate. The backing plate 24 extends generally parallel to the contact surface 14 of the block 12 and is made of steel and is sufficiently thick to enable the reaction forces to be accommodated. The backing plate 24, thus, carries the block 12.

The backing plate 24 is substantially rigid in a central region thereof which supports a central region of the block 12, the plate 24 having a uniform thickness, e.g. 5mm in this region. The plate 24, however, is flexible in edge regions thereof which support the block adjacent to its leading and trailing edges 16 and 18. The flexibility of the edge regions of the plate 24 is achieved by a reduction in thickness of the plate 24 in said edge regions. This reduction in thickness is achieved by chamfers 28 on the surface 31 of the backing plate 24 away from the underlay 21 and the block 12. The chamfers 28 are at angles of approximately 7.5° and cause a thickness reduction of the backing plate 24 by a maximum of 50% which is achieved at the leading and trailing edges 16 and 18. As the edges 16 and 18 are approached, the backing plate 24 becomes progressively more flexible.

The backing plate 24 has increased flexibility adjacent the leading and trailing edges 16 and 18 and the chamfers 28 cause only a small reduction in the overall strength of the backing plate 24.

The brake pad 10 was compared in thermal stress tests with a similar pad not having the chamfers 28. It was found that at a point on the leading edge 16 at the interface between the block 12 and the underlay 21, the similar pad exhibited a stress of 3.03 Newtons per square millimetre whereas the pad 10 had 2.28 Newtons per square millimetre. In the same units, the stresses at the adhesive layer were 11.7 for the similar pad and 9.7 for the pad 10.

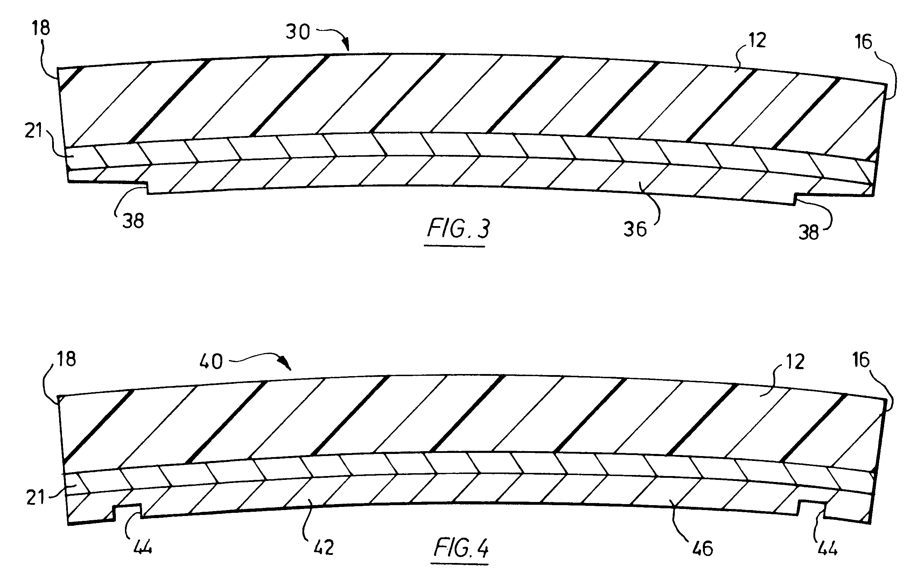

Figure 2 to 4 show, respectively, the second illustrative brake pad 20, the third illustrative brake pad 30, and the fourth illustrative brake pad 40. The pads 20, 30 and 40 are identical to the pad 10 except so far as the form of their backing plates are concerned and like parts are given identical reference numerals in the drawings.

The backing plate 32 of the pad 20 extends beyond the leading and trailing edges 16 and 18 of the block 12 and, instead of a chamfer, is reduced in thickness by steps 34 in the surface of the backing plate 32 away from the block 12. There is a step 34 adjacent both the leading edge 16 and the trailing edge 18. The reduction in thickness is approximately 50%.

The pad 30 shown in Figure 3 is identical to the pad 20 but its backing plate 36 terminates at the leading and trailing edges 16 and 18. The backing plate 36, thus, has two steps 38 therein adjacent to and extending parallel to the leading and trailing edges 16 and 18.

The pads 20 and 30, thus, have backing plates 32 and 42 which are substantially rigid in central regions thereof which support central regions of the blocks 12 and are flexible in edge regions thereof which support the blocks 12 adjacent to their leading and trailing edges 16 and 18.

The pads 20 and 30 were compared with the aforementioned similar pad in a thermal stress test. At the adhesive layer, the stresses were 8.47 and 8.14 Newtons per square millimetre, respectively, compared with the 11.7 of the similar pad.

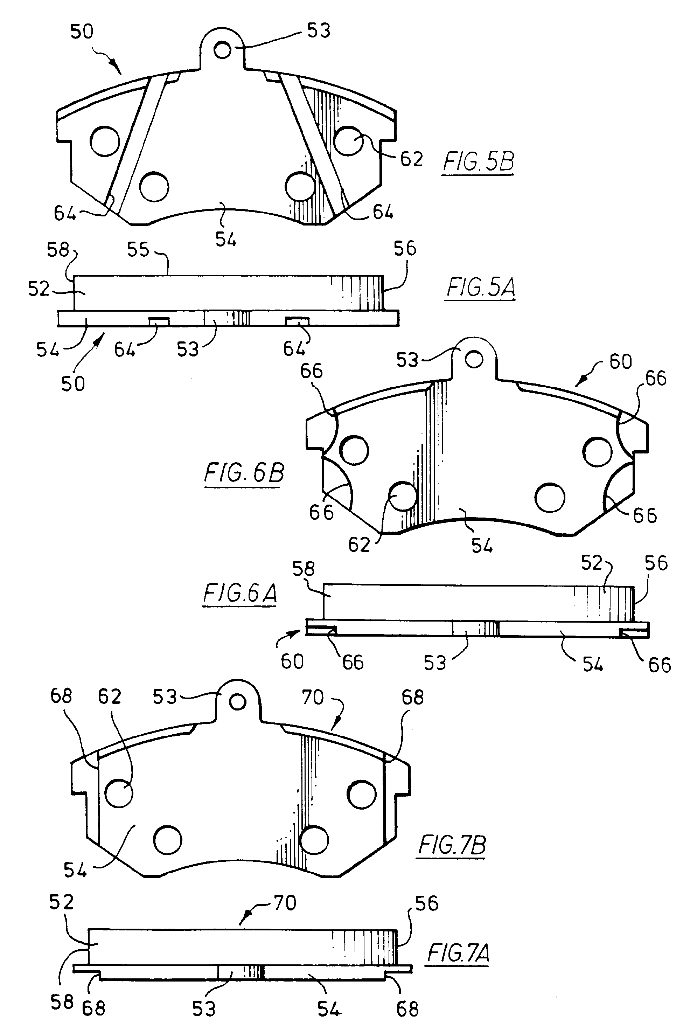

The fourth illustrative pad 40, shown in Figure 4, is similar to the pads 10, 20 and 30 except that it has a backing plate 42 in which the reduction in thickness is achieved by two grooves 44 of rectangular cross-section in the surface 46 of the backing plate 42 away from the block 12. The grooves 44 extend parallel and adjacent to the leading and trailing edges 16 and 18. In modifications of the pad 40, each groove 44 may be replaced by two or more parallel grooves and the grooves may be of semi-circular or other cross-section. Thus, the backing plate 42 is flexible in edge regions thereof which support the block 12 adjacent to the leading and trailing edges 16 and 18 as the plate 42 can bend at the grooves 44.

The fifth, sixth and seventh illustrative pads 50, 60 and 70 shown in Figures 5 to 7, each comprise a block of friction material 52 and a backing plate 54 which has a fixing projection 53. The block 52 has a contact surface 55 extending between a leading edge 56 and a trailing edge 58. To assist in securing the block 52 to the backing plate 54, the block 52 has four cylindrical projections 62 which extend through holes in the backing plate 54. The fifth to seventh pads 50, 60 and 70 differ from one another in the form of their backing plates 54 which all have reduced thickness adjacent the leading and trailing edges 56 and 58 but reduce the thickness in different manners. In all three cases, the backing plate 54 is substantially rigid in a central region thereof which supports a central region of the block 52 and is flexible in edge regions thereof which support the block adjacent to its leading and trailing edges 56 and 58.

The backing plate 54 of the pad 50 has grooves 64 of rectangular cross-section in its surface which faces away from the block 52. In order to miss the projections 62, the grooves 64 are inclined relative to the edges 56 and 58.

The backing plate 54 of the pad 60 has two arcuate cut-outs 66 extending half-way through the plate 54 forming steps in the surface of the plate 54 which faces away from the block 52. The cut-outs 66 are adjacent each of the edges 56 and 58.

The backing plate 54 of the pad 70 is similar to the backing plate 74 of the second illustrative pad 20 in that it has a rectangular step 68 adjacent each edge 56 and 58.

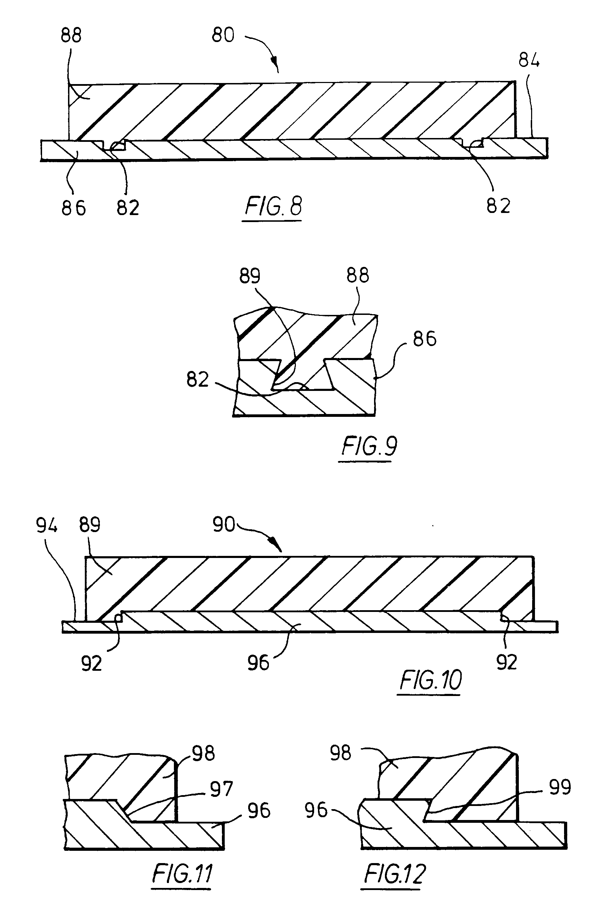

The eighth illustrative brake pad 80 is shown in Figure 8. The pad 80 is similar to the fourth illustrative pad 40 except that, instead of grooves 44, it has rectangular grooves 82 in the surface 84 of its backing plate 86 which faces the block of frictional material 88. The frictional material extends into the grooves 82 improving the adhesion between the plate 86 and the block 88. Figure 9 illustrates a variation of the pad 80 in which the grooves 82 have re-entrant side walls 89 to improve the grip on the frictional material.

The nineth illustrative brake pad 90 is shown in Figure 10. It is similar to the third illustrative pad 30 except that, instead of the steps 38, it has rectangular steps 92 in the surface 94 of its backing plate 96 which faces the block of frictional material 98. The frictional material of the block 98 extends over the steps 92 so that adhesion between the block 98 and the plate 96 is improved. Figures 11 and 12 illustrative variations of the pad 90 in which the steps have inclined faces. In the case of Figure 11, the steps have inwardly inclined faces 97 and, in the case of Figure 12, the steps have outwardly inclined faces 99.

The backing plates 86 and 96 are substantially rigid in their central regions which support central regions of the blocks 88 and 98 and are flexible in edge regions thereof which support the block adjacent to its leading and trailing edges.

In a test, a pad similar to the pads 80 and 90 but having a backing plate of uniform thickness throughout was found to have a stress on the leading edge at the junction of the block and the backing plate of 15.3 Newtons per square millimetre. The comparable figures for the pads 80 and 90 were 11.7 and 9.66, respectively.

## Claims

1. A brake pad (10;20;30;40;50;60;70;80;90) for a disc brake suitable for use in braking a moving member, the brake pad comprising a block of friction material (12;52;88;98) having a contact surface (14) arranged to be brought into engagement with the moving member, the contact surface extending between a leading edge of the block (16;56), relative to the direction of movement of the moving member past the brake pad, and a trailing edge of the block (18;58), the brake pad also comprising a backing plate (24;32;36;42;54;86;96) on which the block of friction material is carried, the backing plate extending generally parallel to the contact surface of the block, characterised in that the backing plate (24;32;36;42;54;86;96) is substantially rigid in a central region thereof which supports a central region of the block (12;52;88;98) and is flexible in edge regions thereof which support the block adjacent to its leading and trailing edges (16;56;18;58).

2. A brake pad according to Claim 1, characterised in that the flexibility of the edge regions of the backing plate is achieved by a reduction in thickness of the backing plate in said edge regions.

3. A brake pad according to Claim 2, characterised in that the central region of the backing plate is of substantially uniform thickness.

4. A brake pad according to either one of Claims 2 and 3, characterised in that the reduced thickness of the backing plate (24) is provided by chamfers (28) on the surface of the backing plate away from the block.

5. A brake pad according to either one of Claims 2 and 3, characterised in that the reduced thickness of the backing plate is provided by grooves (44;64;82) in the backing plate (42;54;86).

6. A brake pad according to Claim 5, characterised in that the grooves (82) are in the surface of the backing plate facing the block and the grooves contain material of the block (88).

7. A brake pad according to Claim 6, characterised in that the grooves (82) have re-entrant side walls (89).

8. A brake pad according to either one of Claims 2 and 3, characterised in that the reduced thickness of the backing plate is provided by steps (34;38;66;68;92) in the backing plate (32;36;54;96).

9. A brake pad according to Claim 8, characterised in that the steps (66) each have a curved profile when viewed in plan view.

10. A brake pad according to either one of Claims 8 and 9, characterised in that steps have inclined faces (97;99).

## Patentansprüche

1. Bremsbelag (10; 20; 30; 40; 50; 60; 70; 80; 90) für eine Scheibenbremse, geeignet für die Verwendung beim Bremsen eines sich bewegenden Teils, wobei der Bremsbelag einen Block von Reibungsmaterial (12; 52; 88; 98) mit einer Kontaktfläche (14) enthält, die angeordnet ist, um in Eingriff mit dem sich bewegenden Teil gebracht zu werden, wobei sich bezüglich der Richtung der Bewegung des sich bewegenden Teils an dem Bremsbelag vorbei die Kontaktfläche zwischen einem vorderen Rand (16; 56) des Blocks und einem hinteren Rand (18; 58) des Blocks erstreckt, wobei der Bremsbelag auch eine Trägerplatte (24; 32; 36; 42; 54; 86; 96) enthält, auf der der Block von Reibungsmaterial getragen wird, wobei sich die Trägerplatte im allgemeinen parallel zu der Kontaktfläche des Blocks erstreckt, dadurch gekennzeichnet, daß die Trägerplatte (24; 32; 36; 42; 54; 86; 96) im wesentlichen in ihrem mittleren Bereich, der einen mittleren Bereich des Blocks (12; 52; 88; 98) trägt, starr ist und in ihren Randbereichen, die den zu ihrem vorderen und hinteren Rand (16; 56; 18; 58) benachbarten Block tragen, elastisch ist.

2. Bremsbelag gemäß Anspruch 1, dadurch gekennzeichnet, daß die Elastizität der Randbereiche der Trägerplatte durch eine Reduktion der Stärke der Trägerplatte in den Randbereichen erreicht wird.

3. Bremsbelag gemäß Anspruch 2, dadurch gekennzeichnet, daß der mittlere Bereich der Trägerplatte von im wesentlichen gleichmäßiger Stärke ist.

4. Bremsbelag gemäß einem der Ansprüche 2 oder 3, dadurch gekennzeichnet, daß die reduzierte Stärke der Trägerplatte (24) sich aus Abschrägungen (28) auf der von dem Block fernen Fläche der Trägerplatte ergibt.

5. Bremsbelag gemäß einem der Ansprüche 2 oder 3, dadurch gekennzeichnet, daß die reduzierte Stärke der Trägerplatte sich aus Rillen (44; 64; 82) in der Trägerplatte (42; 54; 86) ergibt.

6. Bremsbelag gemäß Anspruch 5, dadurch gekennzeichnet, daß die Rillen (82) in der dem Block gegenüberliegenden Fläche der Trägerplatte sind, und die Rillen Material des Blocks (88) enthalten.

7. Bremsbelag gemäß Anspruch 6, dadurch gekennzeichnet, daß die Rillen (82) einspringende Seitenwände (89) aufweisen.

8. Bremsbelag gemäß einem der Ansprüche 2 oder 3, dadurch gekennzeichnet, daß die reduzierte Stärke der Trägerplatte sich aus Stufen (34; 38; 66; 68; 92) in der Trägerplatte (32; 36; 54; 96) ergibt.

9. Bremsbelag gemäß Anspruch 8, dadurch gekennzeichnet, daß jede der Stufen (66) ein gebogenes Profil aufweist, wenn es in Aufsicht betrachtet wird.

10. Bremsbelag gemäß einem der Ansprüche 8 oder 9, dadurch gekennzeichnet, daß Stufen schräge Flächen (97; 99) aufweisen.

## Revendications

1. Plaquette de frein (10;20;30;40;50;60;70;80;90) pour frein à disque adapté à être utilisé dans le freinage d'un organe mobile, la plaquette de frein comprenant un bloc de matériau de friction (12;52;88;98) comportant une surface de contact (14) destinée à être engagée avec l'organe mobile, la surface de contact s'étendant entre un bord avant (16;56) du bloc, relativement à la direction de déplacement de l'organe mobile au-delà de la plaquette de frein, et un bord arrière (18;58) du bloc, la plaquette de frein comprenant également une plaque de support (24;32;36;42;54;86; 96) sur laquelle le bloc de matériau de friction est supporté, la plaque de support s'étendant généralement parallèlement à la surface de contact du bloc, caractérisée en ce que la plaque de support (24;32;36;42;54;86;96) est sensiblement rigide dans sa région centrale qui supporte une région centrale du bloc (12;52;88; 98) et est flexible dans ses régions de bord qui supportent le bloc près de ses bords avant et arrière (16;56;18;58).

2. Plaquette de frein selon la revendication 1, caractérisée en ce que la flexibilité des régions de bord de la plaque de support est obtenue par une diminution de l'épaisseur de la plaque de support dans lesdites régions de bord.

3. Plaquette de frein selon la revendication 2, caractérisée en ce que la région centrale de la plaque de support a une épaisseur sensiblement uniforme.

4. Plaquette de frein selon l'une quelconque des revendications 2 et 3, caractérisée en ce que l'épaisseur réduite de la plaque de support (24) est obtenue par des chanfreins (28) sur la surface de la plaque de support loin du bloc.

5. Plaquette de frein selon l'une quelconque des revendications 2 et 3, caractérisée en ce que l'épaisseur réduite de la plaque de support est obtenue par des rainures (44;64;82) dans la plaque de support (42;54;86).

6. Plaquette de frein selon la revendication 5, caractérisée en ce que les rainures (82) sont situées dans la surface de la plaque de support donnant sur le bloc et les rainures renferment du matériau du bloc (88).

7. Plaquette de frein selon la revendication 6, caractérisée en ce que les rainures (82) comportent des parois latérales rentrantes (89).

8. Plaquette de frein selon l'une quelconque des revendications 2 et 3, caractérisée en ce que l'épaisseur réduite de la plaque de support (24) est obtenue par des gradins (34;38;66;68;92) dans la plaque de support (32;36;54;96).

9. Plaquette de frein selon la revendication 8, caractérisée en ce que les gradins (66) ont chacun un profil courbe lorsqu'ils sont vus en plan.

10. Plaquette de frein selon l'une quelconque des revendications 8 et 9, caractérisée en ce que les gradins comportent des faces inclinées (97;99).
